(19) Europäisches Patentamt
European Patent Office
Office européen des brevets

(11) **EP 3 170 007 B1**

(12) **FASCICULE DE BREVET EUROPEEN**

(45) Date de publication et mention de la délivrance du brevet:
**20.05.2020 Bulletin 2020/21**

(21) Numéro de dépôt: **15736453.0**

(22) Date de dépôt: **08.07.2015**

(51) Int Cl.:
*G01P 15/18* (2013.01)   *G01P 21/00* (2006.01)
*G01V 1/20* (2006.01)   *G10K 11/00* (2006.01)

(86) Numéro de dépôt international:
**PCT/EP2015/065589**

(87) Numéro de publication internationale:
**WO 2016/008782 (21.01.2016 Gazette 2016/03)**

(54) **DISPOSITIF ACCELEROMETRE**

**BESCHLEUNIGUNGSMESSERVORRICHTUNG**

**ACCELEROMETER DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2014 FR 1401618**

(43) Date de publication de la demande:
**24.05.2017 Bulletin 2017/21**

(73) Titulaire: **THALES**
**92400 Courbevoie (FR)**

(72) Inventeurs:
• **ROBERT, Christophe**
**F-06903 Sophia Antipolis (FR)**
• **FINI, Thomas**
**F-06903 Sophia Antipolis (FR)**
• **LEBREIL, Fabienne**
**F-06903 Sophia Antipolis (FR)**
• **LE GRAS, Hervé**
**F-06903 Sophia Antipolis (FR)**
• **TOURNOUD, Isabelle**
**F-06903 Sophia Antipolis (FR)**

(74) Mandataire: **Hnich-Gasri, Naïma et al**
**Marks & Clerk France**
**Immeuble Visium**
**22, avenue Aristide Briand**
**94117 Arcueil Cedex (FR)**

(56) Documents cités:
WO-A1-2006/076499   FR-A1- 2 979 150
US-A1- 2007 258 330   US-A1- 2009 326 851
US-A1- 2011 310 698

**Description**

**Domaine de l'invention**

L'invention concerne de manière générale les systèmes de mesure, et en particulier un dispositif accélérométrique pour mesurer l'accélération 3-axes d'un objet mécaniquement relié à un système de mesure.

**Art antérieur**

Les bâtiments de surfaces ou les sous-marins sont généralement équipés d'antennes acoustiques pour émettre et/ou recevoir les signaux acoustiques se propageant dans le sein de la mer. Une antenne acoustique est formée d'un ensemble de capteurs (hydrophones) séparément accessibles, c'est-à-dire dont les sorties peuvent être combinées de différentes manières.

Les antennes acoustiques comprennent ainsi un ensemble d'hydrophones qui peuvent être agencés dans les modules acoustiques de l'antenne selon différentes combinaisons en fonction de la configuration de l'antenne

Par exemple, une Antenne acoustique Linéaire Remorquée (ALR ou antenne flûte) a une longueur importante pouvant mesurer quelques centaines de mètres et possède un faible diamètre. Une telle antenne est tractée par un câble de remorquage de plusieurs centaines de mètres et est destinée à être immergée jusqu'à des profondeurs assez importantes dans la mer (la pression s'accroît de 1 Bar tous les 10 mètres de fond). En raison de sa longueur, une telle antenne comprend un nombre importants d'hydrophones régulièrement répartis le long de l'antenne dans des modules acoustiques. Il est connu par exemple d'agencer un multi capteur acoustique élémentaire le long de l'antenne flûte dans un module acoustique distinct pour lever l'ambiguïté droite/gauche en acoustique sous-marine. Chaque module acoustique est protégé par un module protecteur de faibles dimensions en raison du faible diamètre de l'antenne flûte. Chaque multi capteur acoustique indépendant est monté sur une carte de circuit imprimé (système concentrateur) à une extrémité de celle-ci et perpendiculairement au plan de la carte. Le module acoustique peut comprendre en outre plusieurs équipements auxiliaires comme des capteurs de direction et de profondeur, et des équipements électroniques qui sont montés sur le système concentrateur, dans l'espace réduit délimité par l'enceinte de protection du module acoustique.

Les multi capteurs acoustiques dans ce cas sont conçus pour fournir des signaux électriques proportionnels aux pressions dynamiques exercées sur eux. Toutefois, leur sensibilité accélérométrique doit être connue pour que les signaux fournis soient référencés selon les forces d'accélération terrestre. Cette référence d'accélération est obtenue en utilisant un capteur d'accélération (encore appelé accéléromètre) monté sur le concentrateur en association avec chaque multi capteur acoustique et fournissant un signal représentatif de l'accélération de la flûte selon deux axes et en compensant l'effet de cette accélération de manière différentielle sur les signaux fournis par chaque multi capteur acoustique. Un tel accéléromètre permet de déterminer l'accélération bi-axiale de l'objet auquel il est fixé pour une antenne horizontale. Des exemples d'accéléromètres connus sont décrits par exemple dans les demandes de brevet US 2009/326851, FR 2 979 150 A1 et WO 2006/076499.

De tels accéléromètres ont un coût important. En particulier, dans le cas d'une antenne flûte, les accéléromètres sont généralement agencés de façon connue le long de l'antenne, généralement tous les 2 mètres pour interpolation. Par ailleurs, pour chaque multi capteur acoustique, un accéléromètre est prévu sur le même concentrateur avec d'autres composants électroniques du module acoustique pour ne pas faire d'interpolation. Compte tenu de la longueur de l'antenne, le nombre d'accéléromètres requis et par suite le coût induit par l'ensemble de ces accéléromètres peuvent être ainsi très importants.

Un autre inconvénient de ces accéléromètres est leur encombrement par rapport au volume de l'enceinte du module acoustique (elle-même limitée par le faible diamètre de l'antenne flûte). En particulier, il peut être utile d'empiler plusieurs cartes de circuit imprimé et de les intégrer dans chaque module acoustique en connectant le multi capteur acoustique sur chacune des cartes empilées, ce qui permet d'assurer la continuité de fonctionnement du multi-capteur en cas de panne. Cependant, l'encombrement actuel des accéléromètres classiques (dans la direction perpendiculaire à l'axe de l'antenne) et leur nombre ne permettrait pas un tel empilement.

**Définition générale de l'invention**

L'invention vient améliorer la situation. A cet effet, elle propose une antenne acoustique comprenant au moins un module acoustique et au moins un dispositif accéléromètre, le module acoustique comprenant un ou plusieurs capteurs acoustiques montés sur au moins une carte de circuit imprimé et une unité de traitement configurée pour déterminer des références d'accélération, les capteurs acoustiques délivrant des signaux électriques en utilisant des références d'accélération fournies par au moins un dispositif accéléromètre. Avantageusement, au moins un module acoustique comprend un dispositif accéléromètre configuré pour déterminer l'accélération de l'antenne selon trois axes X, Y et Z d'un système de référence principal orthonormé (X, Y, Z), l'axe X correspondant à l'axe de roulis de l'antenne acoustique, l'axe Z correspond à l'axe de tangage de l'antenne acoustique et l'axe Y correspond à l'axe de lacet de l'antenne acoustique, le dispositif accéléromètre comprenant un ensemble de N de capteurs accéléromètres de type MEMS. Les capteurs accéléromètres sont montés sur l'une au moins des cartes de circuit imprimé, les capteurs accéléromètres comprenant au moins trois capteurs accéléromètres montés de part et d'autre des au moins une carte de circuit imprimé, la position de chaque capteur accéléromètre étant défini dans un système de référence auxiliaire comprenant 3 axes orthonormés (Xi, Yi, Zi), le plan (Xi, Yi) définissant le plan de chaque capteur accéléromètre et étant parallèle au plan (X, Z) du système de référence. Pour chaque paire de capteurs de l'ensemble de capteurs accéléromètres :

- les capteurs accéléromètres de la paire présentent deux à deux des composantes de signe opposé selon deux axes du système de référence principal ; et
- les axes du système de référence selon lesquels les composantes des capteurs accéléromètres sont deux à deux opposées sur l'ensemble des paires de capteurs comprennent au moins deux des trois axes X, Y et Z du système de référence principal.

Chaque capteur accéléromètre est en outre configuré pour déterminer l'accélération de l'antenne acoustique suivant chaque axe X, Y et Z, l'unité de traitement étant configurée pour déterminer une référence d'accélération pour chaque axe du système de référence à partir des accélérations mesurées par chacune des paires de capteurs accéléromètres.

Dans un mode de réalisation, la référence d'accélération déterminée pour chaque axe du système de référence principal est la moyenne des accélérations mesurées par chaque paire de capteurs accéléromètre selon l'axe.

Le calcul de la moyenne des accélérations suivant un axe donné peut prendre en outre en compte le gain et/ou le décalage de chaque capteur prédéterminé dans une phase de calibrage unitaire mise en œuvre séparément pour chaque capteur avant montage.

Le calcul de la moyenne des accélérations suivant un axe donné peut prendre en outre en compte un facteur de compensation de gain prédéfini.

L'ensemble de capteurs accéléromètres peut comprendre trois capteurs, et les axes du système de référence selon lesquels les composantes des capteurs sont deux à deux opposées sur l'ensemble des capteurs peuvent comprendre les trois axes X, Y et Z du système de référence, ce qui permet de corriger l'effet de la pression qui s'exerce sur l'objet selon les trois axes.

Dans un mode de réalisation, les capteurs accéléromètres peuvent avoir une sensibilité différente à la pression.

En particulier, le capteur acoustique peut être un multi capteur acoustique d'axe sensiblement parallèle à l'axe de l'antenne acoustique.

Dans une forme de réalisation, les cartes de circuit imprimé peuvent comprendre une pluralité de cartes de circuit imprimé, empilées sensiblement perpendiculairement à l'axe de l'antenne.

Le ou les capteurs acoustiques peuvent être montés sur une carte de circuit imprimé dans une direction perpendiculaire à l'axe de l'antenne.

Dans un mode de réalisation, l'antenne acoustique peut comprendre un mécanisme de réglage de positionnement configuré pour régler le positionnement desdits capteurs acoustiques à partir des références calculées par l'unité de traitement selon chaque axe.

L'antenne acoustique peut comprendre au moins deux modules acoustiques.

En variante, les deux capteurs accéléromètres d'une paire de capteurs accéléromètres montés de part et d'autre de la ou des cartes de circuit imprimé peuvent être agencés, l'un par rapport à l'autre, dans la direction de l'axe de l'antenne, à une distance choisie.

L'invention fournit ainsi un dispositif accéléromètre à faible encombrement. L'utilisation d'un tel dispositif dans un module acoustique d'une antenne permet ainsi d'empiler plusieurs cartes de circuits imprimés dans un même module.

Un autre avantage du dispositif accéléromètre selon l'invention est son faible coût. Un tel dispositif est ainsi particulièrement adapté à une utilisation dans des antennes utilisant un nombre de modules acoustiques important.

Le dispositif accéléromètre permet également de fidéliser le système par son auto-référencement, c'est-à-dire la comparaison par rapport à une double référence et un calibrage par rapport à l'accélération de la pesanteur.

## Description des figures

D'autres caractéristiques et avantages de l'invention apparaîtront à l'aide de la description qui suit et des figures des dessins annexés dans lesquels:

- La figure 1 représente un exemple d'environnement dans lequel peuvent être mis en œuvre certains modes de réalisation de l'invention ;

- La figure 2 est une représentation schématique des modules acoustiques d'une antenne flûte, selon certains modes de réalisation de l'invention ;
- La figure 3 est une vue schématique du dispositif accéléromètre selon un mode de réalisation de l'invention ;
- La figure 4 montre le positionnement tête-opposée des capteurs accéléromètres dans un système de référence principal, selon un mode de réalisation de l'invention ;
- La figure 5 représente un dispositif accéléromètre à 3 capteurs accéléromètres dans un système de référence principal, selon un autre mode de réalisation de l'invention ;
- La figure 6 est une représentation schématique des modules acoustiques d'une antenne flûte comprenant des dispositifs accéléromètres à 3 capteurs accéléromètres, selon un mode de réalisation de l'invention ;
- La figure 7 est une vue de dessus des capteurs accéléromètres tête-opposée dans le système de référence principal, selon un exemple de réalisation de l'invention ;
- La figure 8 est un schéma illustrant le traitement des signaux mesurés par les capteurs accéléromètres tête-opposée, selon un mode de réalisation de l'invention ; et
- La figure 9 est un organigramme représentant les étapes de calcul de références selon chaque axe du système de référence principal, selon un mode de réalisation de l'invention.

Les dessins et les annexes à la description pourront non seulement servir à mieux faire comprendre la description, mais aussi contribuer à la définition de l'invention, le cas échéant.

## Description détaillée

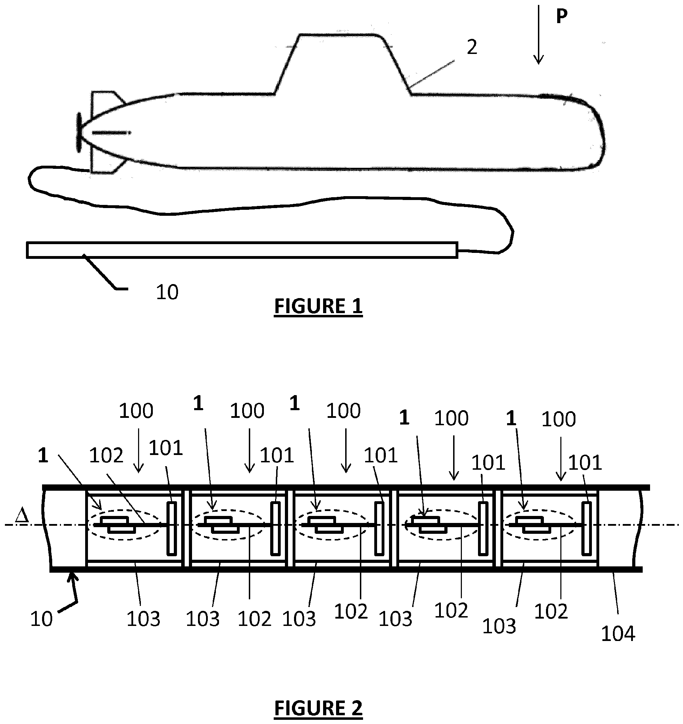

La figure 1 représente un exemple d'environnement dans lequel peuvent être implémentés certains modes de réalisation de l'invention.

Les bâtiments de surface ou les sous-marins 2 sont généralement équipés d'un ensemble d'antennes acoustiques pour émettre et/ou recevoir des signaux acoustiques dans les fonds marins, comme par exemple les antennes flûtes 10 qui bénéficient d'une liberté de mouvement, les antennes distribuées ou les antennes flancs. Pour faciliter la description des modes de réalisation de l'invention, la suite de la description sera faite en référence à une antenne flûte 10 à titre d'exemple non limitatif.

La figure 2 représente un tronçon d'une antenne flûte 10 comprenant un ensemble de modules acoustiques 100. L'antenne flûte 10 comprend en outre un ensemble de capteurs acoustiques 101 (par exemple de type hydrophone) régulièrement répartis le long de l'antenne dans les modules acoustiques 100. Dans le mode de réalisation de la figure 2, un capteur acoustique 101 est agencé à intervalle régulier le long de l'antenne flûte dans un module acoustique distinct 100.

Dans chaque module acoustique 100, comprenant un ou plusieurs capteurs acoustiques 101, est agencée au moins une carte de circuit imprimée 102 (encore appelé « système concentrateur »), par exemple de forme générale rectangulaire, le long de l'axe de l'antenne. Les capteurs acoustiques 101 peuvent être par exemple des multi capteurs acoustiques. Dans un mode de réalisation particulier, les capteurs 101 de type multi-capteur acoustique 101 peuvent comprendre N hydrophones, situés dans un plan perpendiculaire à l'axe Δ de l'antenne linéaire, et répartis sur un cercle centré sur l'axe de l'antenne et ayant un diamètre inférieur au diamètre de l'antenne.

Chaque capteur acoustique 101 peut être connecté mécaniquement et électriquement à au moins une carte 102 pour son interface électrique. En variante, chaque module acoustique 100 peut comprendre une pluralité de cartes de circuit imprimé empilées dans la direction perpendiculaire à l'axe de l'antenne, et connectées mécaniquement et électriquement au capteur acoustique 101 de sorte qu'en cas de panne de l'une des cartes les autres cartes puissent continuer à interfacer le capteur acoustique. La position mécanique de chaque carte 102 est reliée de manière rigide au capteur acoustique 101. La suite de la description sera faite en référence à une seule carte de circuit imprimé 102 et à un capteur acoustique 101 de type multi-capteur, à titre d'exemple non limitatif.

Chaque module acoustique 100 peut être protégé par une enceinte 103 (encore appelé « centreur acoustique ») de faibles dimensions. La hauteur de l'enceinte 103 peut être par exemple limitée par le faible diamètre de l'antenne 10, dans le cas d'une antenne flûte. Chaque capteur acoustique 101 peut être monté sur le système concentrateur 102. Sur la figure 2, chaque multi capteur acoustique 101 est monté à une extrémité du système concentrateur et perpendiculairement au plan du concentrateur pour optimiser l'occupation de l'espace délimité par l'enceinte 103 du module acoustique. Les multi capteur acoustiques sont configurés pour fournir des signaux électriques proportionnels aux pressions dynamiques exercées sur eux.

Chaque module acoustique 100 peut comprendre en outre plusieurs équipements électroniques auxiliaires.

L'antenne flûte 10 peut notamment être munie d'une enveloppe de protection 104 destinée à protéger les équipements électroniques. Elle peut contenir notamment un liquide de densité plus légère que l'eau et de résistivité très importante (comme par exemple de l'huile) pour limiter l'écrasement de l'enveloppe et de son contenu. Un tel liquide permet notamment de conférer une flottabilité sensiblement nulle à l'antenne et de mettre l'antenne en équipression avec l'extérieur.

Selon un aspect de l'invention, chaque module acoustique 100 peut comprendre un dispositif accéléromètre 1 pour déterminer l'accélération de l'antenne 10 selon 3 axes X, Y et Z définissant un système de référence principal orthonormé et pour compenser l'effet de l'accélération sur le signal fourni par chaque multi capteur acoustique 101. Dans les applications de l'invention aux antennes acoustiques, l'axe X correspond à l'axe de roulis, l'axe Z correspond à l'axe de tangage et l'axe Y correspond à l'axe de lacet.

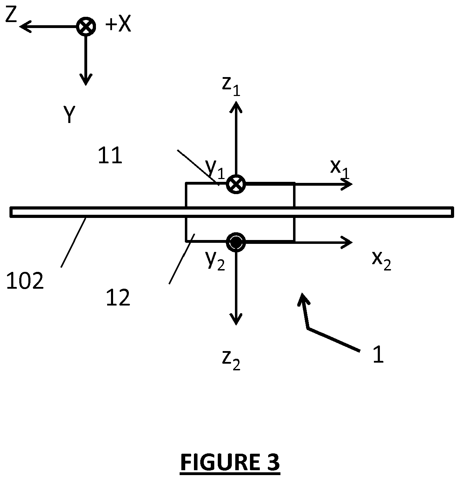

La figure 3 est une vue schématique du dispositif accéléromètre 1 montrant le système de référence principal (X, Y, Z). Le dispositif accéléromètre 1 comprend un ensemble de capteurs accéléromètres digitaux 11, 12 de type microsystème électronique (encore appelés MEMS en relation avec l'expression anglo-saxonne « microelectromechanical systems »). Les capteurs accéléromètres MEMS 11 et 12 peuvent être montés sur au moins une carte de circuit imprimée 102 et sensiblement parallèles entre eux. Les capteurs accéléromètres peuvent être par exemple de forme générale rectangulaire et de très faible hauteur. Dans un mode de réalisation, le dispositif accéléromètre peut être monté de manière rigide sur les mêmes cartes de circuit imprimé 102 que le capteur acoustique 101. Dans la description qui suit de certains modes de réalisation, il sera fait référence à une carte de circuit imprimée 102 communément reliée au capteur acoustique 101 et au dispositif accéléromètre 1 à titre d'exemple illustratif.

Selon un aspect de l'invention, le dispositif accéléromètre 102 comprend au moins une paire de capteurs accéléromètres 11 et 12 agencés tête-opposée l'un par rapport à l'autre. Les capteurs 11 et 12 peuvent avoir une sensibilité différente à la pression. Dans une forme de réalisation, la paire de capteurs tête-opposée comprend deux capteurs 11 et 12 agencés de part et d'autre de la carte de circuit imprimée 102 (encore appelés respectivement « capteur supérieur » et « capteur inférieur ») comme représenté sur la figure 3.

Chaque capteur accéléromètre 11 et 12 est associé par construction à un système de référence de capteur (Xi, Yi, Zi) qui permet de définir le positionnement du capteur accéléromètre. Le plan (Xi, Yi) définit le plan de chaque capteur accéléromètre. Chaque capteur accéléromètre est agencé dans le dispositif 1 de telle sorte que son plan (Xi, Yi) soit parallèle au plan (X, Z) du système de référence.

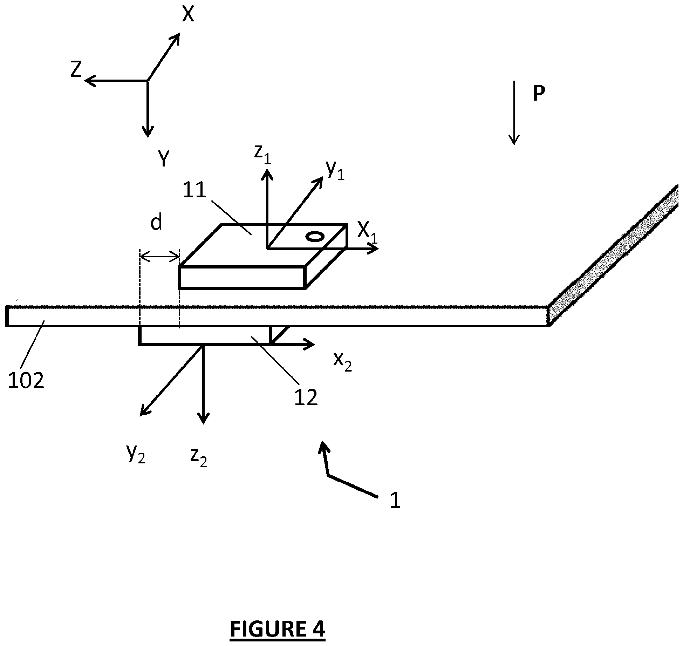

Les capteurs accéléromètres 11 et 12 montés en opposition peuvent être en vis-à-vis par rapport à l'axe de l'antenne ou agencés à une distance d choisie l'un par rapport à l'autre par rapport à l'axe de l'antenne, comme représenté sur la figure 4. La distance d peut être choisie en fonction de l'orientation du plan de support (par exemple, elle peut être plus ou moins importante selon que le plan de support est ou non parallèle). Par ailleurs, la fixation des accéléromètres sur la carte 102 (par exemple fixation de type soudage) peut être effectuée de manière à contenir les erreurs.

Dans les exemples représentés sur les figures 3 et 4, le système de référence du capteur supérieur 11 est noté (X1, Y1, Z1) tandis que le système de référence du capteur inférieur 12 est noté (X2, Y2, Z2). Le positionnement tête-opposée relatif des deux capteurs 11 et 12 est tel que les axes Z1 et Z2 respectifs du premier capteur 11 et du deuxième capteur 12 sont parallèles et de signes opposés.

Tel qu'utilisé ici en relation avec un dispositif accéléromètre à N capteurs, le terme « tête-opposée » désigne le montage des capteurs accéléromètres parmi les N capteurs tels que :

- pour chaque paire de capteurs considérée, les capteurs ont deux à deux des composantes de signe opposé selon deux axes du système de référence principal (par exemple, l'axe Z1 du capteur accéléromètre supérieur 11 correspond à l'axe
- Z2 du capteur accéléromètre inférieur 12 et l'axe Y1 du capteur accéléromètre supérieur 11 correspond à l'axe -Y2 du capteur accéléromètre inférieur 12), et
- les axes du système de référence principal selon lesquels les composantes sont opposées pour l'ensemble des paires capteurs comprennent au moins deux des trois axes X, Y et Z du système de référence.

Un tel positionnement des capteurs permet de corriger l'effet de la pression qui s'exerce sur l'antenne sur au moins deux axes.

En référence à la figure 4, le positionnement des capteurs accéléromètres 11 et 12 par rapport au système de référence principal (X, Y, Z) est tel que :

- l'axe X1 du premier capteur accéléromètre 11 coïncide avec l'axe -Z du système de référence principal;
- l'axe Y1 du premier capteur accéléromètre 11 coïncide avec l'axe X du système de référence principal;
- l'axe Z1 du premier capteur accéléromètre 11 coïncide avec l'axe -Y du système de référence principal;
- l'axe X2 du deuxième capteur accéléromètre 12 coïncide avec l'axe -Z du système de référence principal;
- l'axe Y2 du deuxième capteur accéléromètre 12 coïncide avec l'axe -X du système de référence principal;
- l'axe Z2 du deuxième capteur accéléromètre 12 coïncide avec l'axe Y du système de référence principal.

Ainsi, lorsque le dispositif accéléromètre comprend 2 capteurs 11 et 12 (montage 2D), le montage tête-opposée des deux capteurs accéléromètres est tel que les deux capteurs ont des composantes de signe opposé selon deux axes du système de référence principal (par exemple, l'axe +Z1 du capteur accéléromètre supérieur 11 correspond à l'axe -Z2 du capteur accéléromètre inférieur 12 et l'axe +Y1 du capteur accéléromètre supérieur 11 correspond à l'axe -Y2 du capteur accéléromètre inférieur 12). Ainsi, 2 axes sur les 3 axes du système de référence principal sont opposés (Y correspondant à la direction des axes Z1/Z2 et X correspondant à la direction des axes Y1/Y2), ce qui permet de compenser l'effet de la pression selon ces 2 axes.

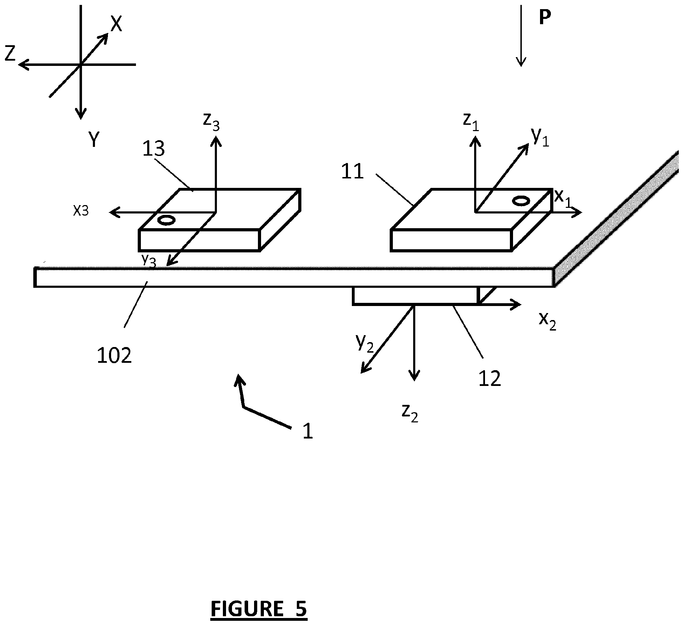

La figure 5 montre un dispositif accéléromètre à 3 capteurs. Le positionnement des capteurs accéléromètres 11, 12 et 13 par rapport au système de référence principal (X, Y, Z) est tel que :

- l'axe X1 du premier capteur accéléromètre 11 coïncide avec l'axe -Z du système de référence principal;
- l'axe Y1 du premier capteur accéléromètre 11 coïncide avec l'axe X du système de référence principal;
- l'axe Z1 du premier capteur accéléromètre 11 coïncide avec l'axe -Y du système de référence principal;
- l'axe X2 du deuxième capteur accéléromètre 12 coïncide avec l'axe -Z du système de référence principal;
- l'axe Y2 du deuxième capteur accéléromètre 12 coïncide avec l'axe -X du système de référence principal;
- l'axe Z2 du deuxième capteur accéléromètre 12 coïncide avec l'axe Y du système de référence principal;
- l'axe X3 du troisième capteur accéléromètre 13 coïncide avec l'axe Z du système de référence principal;
- l'axe Y3 du troisième capteur accéléromètre 13 coïncide avec l'axe -X du système de référence principal;
- l'axe Z3 du troisième capteur accéléromètre 13 coïncide avec l'axe -Y du système de référence principal.
Les composantes de chaque paire de capteur ont ainsi des composantes de signe opposé. Ainsi, pour la paire {11, 12},
- les axes Y1, Y2 du premier et du deuxième capteur 11 et 12 sont opposés (correspondant à la direction de l'axe X du système de référence); et
- les axes Z1, Z2 du premier et du deuxième capteur 11 et 12 sont opposés (correspondant à la direction de l'axe Y du système de référence).

Pour la paire {11, 13},

- les axes X1, X3 du premier et du troisième capteur 11 et 13 sont opposés (correspondant à la direction de l'axe Z du système de référence); et
- les axes Y1, Y3 du premier et du troisième capteur 11 et 13 sont opposés (correspondant à la direction de l'axe Y du système de référence).

Pour la paire {12, 13},

- les axes X2, X3 du deuxième et du troisième capteur 12 et 13 sont opposés (correspondant à la direction de l'axe Z du système de référence); et
- les axes Z2, Z3 du deuxième et du troisième capteur 12 et 13 sont opposés (correspondant à la direction de l'axe Y du système de référence).

En variante, le troisième capteur 13 peut être monté en opposition suivant l'axe Y par rapport au premier capteur 11 : les axes Z2 et Z3 du deuxième capteur accéléromètre 12 et du troisième capteur accéléromètre 13 respectivement sont alors parallèles et de signe opposé à l'axe Z1 du premier capteur accéléromètre 11, ce qui correspond à deux paires de capteurs accéléromètres montés tête-opposée : 11/12 et 11/13. De manière similaire, le capteur 13 peut être positionné au niveau du capteur 12.

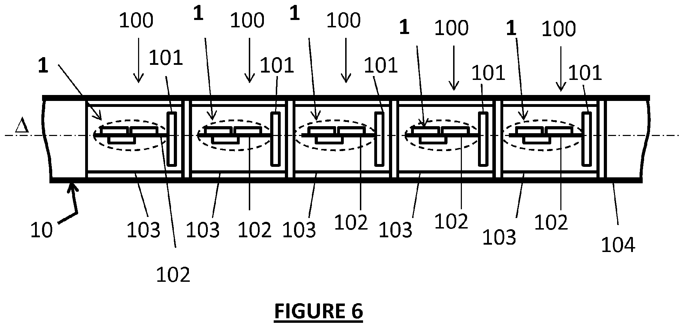

Ainsi, lorsque le dispositif accéléromètre comprend 3 capteurs 11, 12 et 13 (3D), comme illustré dans les exemples des figures 5 et 6, le montage tête opposée des trois capteurs accéléromètres est tel que :

- pour chaque paire de capteurs considérée, par exemple {12, 13} et {11, 12}, les capteurs ont deux à deux des composantes de signe opposé selon deux axes du système de référence principal (par exemple Z3/Z2 et X3/X2 pour la paire {12, 13} ou Z1/Z2 et Y1/Y2 pour la paire {11, 12}), et
- les axes du système de référence principal selon lesquels les composantes sont opposées sur l'ensemble des paires de capteurs comprennent les trois axes X, Y et Z du système de référence.

Ainsi, les composantes selon les trois axes X, Y, Z sont opposées sur l'ensemble des paires, ce qui permet de compenser l'effet de la pression sur les 3 axes.

Dans un mode de réalisation, chaque capteur 11, 12, 13 est un capteur accéléromètre à 3-axes, de type capacitif, à haute résolution et ultra faible puissance (comme décrit dans la fiche technique du composant ADXL346 de Analog Devices « Ultralow Power Digital Accelerometer »).

Il convient de noter que bien qu'un nombre de capteurs égal à trois est suffisant pour compenser l'effet de la pression sur les trois axes, le dispositif peut comprendre un nombre supérieur de capteurs accéléromètres.

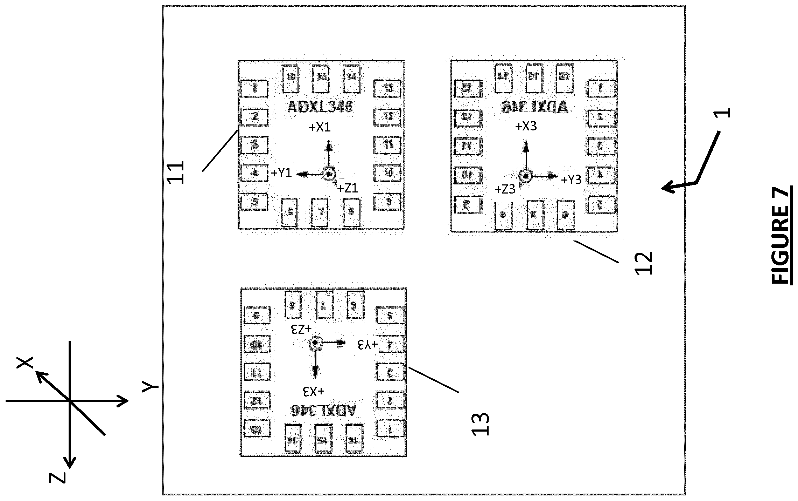

La figure 7 montre une vue schématique de dessus des trois capteurs accéléromètre 11, 12 et 13 de la figure 5. Dans l'exemple représenté, chaque capteur accéléromètre est un capteur de type ADXL346 au format LGA (acronyme pour l'expression anglo-saxone « Land Grid Array ») et comprend 16 broches de connections notées 1 à 16. Les MEMS de format LGA sont encapsulés de manière non symétrique en 3D de sorte que les contraintes qui s'exercent selon l'axe Z (qui correspond dans certains modes de réalisation à la verticale du circuit) sont plus importantes que sur les axes X, Y, ce qui perturbe la capacité des capteurs. La pression est donc très sensible sur les MEMs de type LGA. En particulier, des dérives importantes sont observées sur l'axe Z de chacun de ces capteurs, par exemple de l'ordre de 20% à 100 Bars, et donc également sur la norme du capteur (représentant la valeur de l'accélération de la pesanteur) lorsque le boîtier est soumis à cette pression.

Les MEMS étant très sensibles à la pression, à des profondeurs d'immersion importantes ils peuvent donc fournir une estimation de l'accélération très biaisée en raison de la forte pression qui s'exerce. L'équi-pression dans la gaine s'applique sur l'huile incompressible et sur les MEMS.

L'utilisation du dispositif accéléromètre selon les modes de réalisation de l'invention permet non seulement de compenser l'effet de l'accélération sur les signaux fournis par les multi capteurs acoustiques mais aussi de rendre les capteurs accéléromètres de type MEMS 11, 12, 13 insensibles à la pression P qui s'exerce sur eux, sans connaissance de la valeur de la pression P.

En montant les capteurs accéléromètres de type MEMS selon une configuration tête-opposée, pour chaque paire telle que par exemple la paire {11, 12}, l'écart de référencement dû à la pression exercée sur le premier capteur 11 (capteur haut) est de signe opposé à l'écart de référencement dû à la pression exercée sur le deuxième capteur 12. Cela permet de compenser l'effet de la pression qui s'exerce sur le module acoustique sur au moins deux axes.

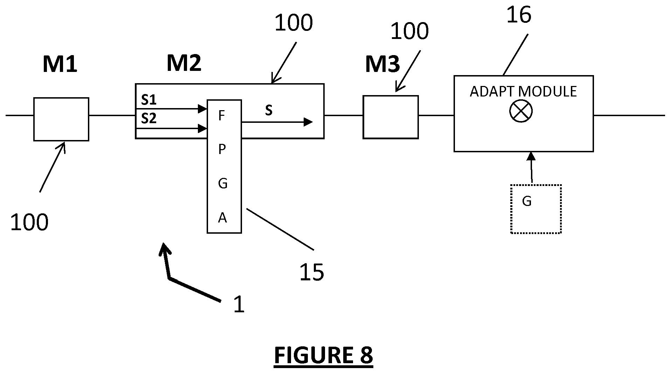

La figure 8 représente une vue schématique du tronçon d'antenne 10 comprenant trois modules acoustiques M1, M2, M3 (100) montrant l'architecture de traitement des signaux mesurés par les capteurs, selon un exemple de réalisation de l'invention. Dans l'exemple représenté, seul le module M2 est équipé d'un dispositif accéléromètre 1 à deux capteurs fournissant des accélérations trois-axes S1 et S2 et d'un capteur acoustique 101 associé (les éléments 1 et 101 ne sont pas représentés sur la figure 8).

Le dispositif accéléromètre 1 peut comprendre une unité de traitement 15 (par exemple de type FPGA, acronyme pour l'expression anglo-saxonne Field Programmable Gâte Array) configurée pour calculer une moyenne (encore appelée « référence ») sur chacun des axes X, Y et Z des accélérations mesurées par chaque paire de capteurs accéléromètre tête-opposée (11, 12) du dispositif 1 (moyenne des composantes de signes opposées). Par exemple dans les modes de réalisation où le dispositif comprend plus de N capteurs accéléromètres, dont une paire tête-opposée, montés tels que N-1 capteurs accéléromètres (capteurs supérieurs) sont agencés sur la partie supérieure de la carte tandis que 1 capteur est monté sur la partie inférieure (capteur inférieur), (N-1) paires pourront être considérées pour le calcul des références par axe, chaque paire comprenant un des (N-1) capteurs supérieurs et le capteur inférieur. Les références ainsi calculées permettent de réduire l'écart d'accélération due à la pression P statique qui s'exerce le long de chaque axe sur l'antenne acoustique.

Dans certains modes de réalisation, l'unité de traitement 15 peut être utilisée pour calibrer les valeurs des accélérations selon les 3 axes X, Y et Z préalablement au montage des capteurs accéléromètres MEMS 11 et 12 et pour améliorer la précision de l'estimation finale de l'accélération 3-axes. Le calibrage permet notamment de déterminer l'erreur de positionnement par rapport au codage de chaque capteur accéléromètre MEMS 11 et 12 (calibrage mécanique). Par ailleurs, sur le plan électrique, les capteurs accéléromètres peuvent ne pas être identiques et localement en position stable de sorte que les mesures peuvent être altérées. Le calibrage électrique des capteurs accéléromètres permet de compenser l'architecture pour obtenir les valeurs attendues en termes de gain et de décalage (offset). Par exemple, en choisissant comme référence le support du capteur acoustique la valeur attendue pour 1g est de 256 et pour -1g de -256, pour chaque coordonnée de la référence.

Dans l'exemple de la figure 8, l'unité de traitement 15 du dispositif accéléromètre du module M2 (FPGA) permet de calibrer les capteurs accéléromètres 11, 12 en effectuant la moyenne des accélérations respectives mesurées selon les trois axes S1=(X1, Y1, Z1) et S2=(X2, Y2, Z2) à partir de paramètres de calibrage préalablement calculés.

Dans un mode de réalisation, chaque capteur accélérométrique peut être calibré unitairement (séparément).

Le procédé de calibrage peut comprendre les étapes suivantes :

- avant le montage du dispositif accéléromètre 1, pour chaque capteur accéléromètre 11 et 12 du dispositif 1, les paramètres de calibrage (gains et décalage) sont estimés pour chaque axe X, Y, Z à partir d'une série de mesures. En particulier, une accélération de 1*g le long de chaque axe de capteur accéléromètre est encodée en une valeur de sortie connue au niveau de la sortie du capteur dans la direction concernée (la valeur de sortie attendue peut être par exemple « 256 »). Les mesures effectuées le long de chaque axe pour chaque capteur accéléromètre 11, 12 du dispositif et la comparaison des mesures avec la valeur attendue (e.g. « 256 ») permettent alors d'estimer le décalage (« offset » en langue anglo-saxonne) et le gain de chaque capteur le long de chaque axe. Le gain et le décalage estimé pour chaque capteur et pour chaque axe de capteur accéléromètre 11, 12 du dispositif 1 (encore appelés « paramètres de calibrage ») peuvent être alors stockés en mémoire parmi les constantes du dispositif FPGA 15.

-dans les conditions réelles, par exemple en mer, le dispositif de traitement FPGA 15 peut traiter les valeurs d'accélération d'entrée qui comprennent 3 valeurs par capteur accéléromètre 11, 12 du dispositif accéléromètre 1, ces 3 valeurs correspondant à une valeur d'accélération par axe X, Y ou Z. Ainsi pour un dispositif accéléromètre 1 muni de 2 capteurs accéléromètres MEMS, 6 valeurs seront traitées. Ce procédé de traitement consiste à calibrer l'ensemble de ces valeurs d'accélération (au moins 6 valeurs) en utilisant les paramètres de calibrage prédéterminés pendant la phase de calibrage au moment de la fabrication du dispositif 1 (stockés dans le dispositif FPGA 15). Plus précisément, pour chaque axe X, Y et Z, la moyenne des paires de valeurs calibrées est calculée pour chaque paire de capteurs accéléromètres 11 et 12 comprenant deux capteurs tête-opposée.

La phase préalable de calibrage permet d'augmenter la précision et de réduire le décalage d'erreur. Elle permet également de tester la fonction embarquée, notamment lors de l'intégration et en phase de maintenance pour différents types de capteurs accéléromètres MEMS, ce qui permet de réduire les risques.

Il doit être noté que la phase de calibration initiale est une phase optionnelle qui peut être ou non mise en œuvre en fonction de la précision recherchée.

En complément, l'antenne acoustique peut comprendre un module adaptateur 16 pour appliquer un facteur de compensation de gain G (encore appelé facteur d'échelle) qui peut être appliqué pour remettre à l'échelle les valeurs d'accélération calibrées (moyennes calculées pour chaque axe). Le facteur d'échelle G permet d'adapter la dynamique des nombres pour pouvoir effectuer les calculs avec un calculateur plus simple (par exemple avec des nombres entiers et non des nombres avec virgules).

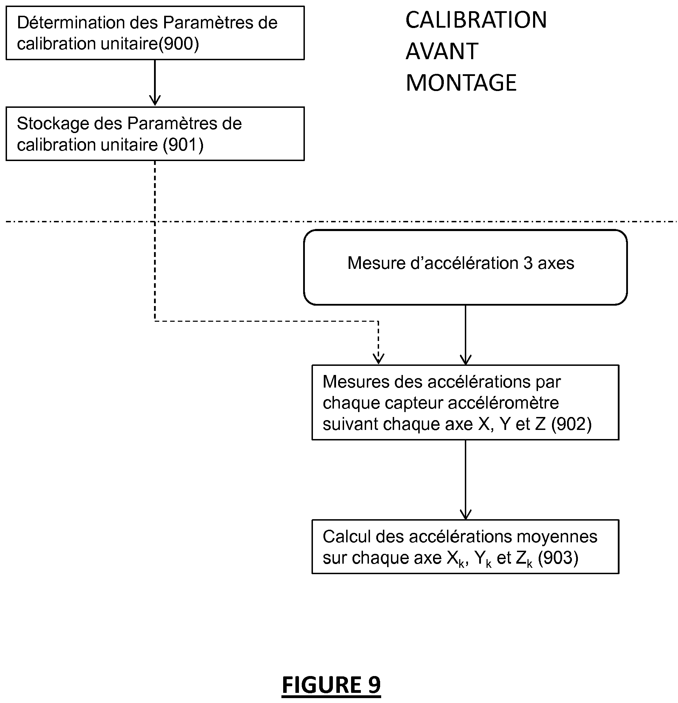

La figure 9 est un organigramme représentant le procédé de calcul des valeurs d'accélération calibrées pour un dispositif accéléromètre 1 à 3 capteurs accéléromètres comprenant au moins deux capteurs tête-opposée (k paires de capteurs accéléromètres).

Le procédé peut être mis en œuvre à une période choisie (par exemple toutes les 50 ms). Le procédé est en particulier mis en œuvre pour chaque paire de capteurs accéléromètres MEMS (agencée selon un montage tête-opposée) du dispositif accéléromètre 1.

Pour faciliter la compréhension de la description qui suit, les notations suivantes sont définies pour chacune des k paires de capteurs accéléromètres du dispositif accéléromètre 1 (une paire est constituée de deux capteurs agencés tête-opposée comprenant un capteur supérieur, e.g. 11, et un capteur inférieur, e.g. 12) :

- $b_{x,k,sup}$, $b_{y,k,sup}$, $b_{z,k,sup}$ désignent respectivement les décalages du capteur accéléromètre tête-opposée supérieur (e.g. 11) selon chaque axe X, Y, Z ;
- $b_{x,k,inf}$, $b_{y,k,inf}$, $b_{z,k,inf}$ désignent respectivement les décalages de référence du capteur accéléromètre tête-opposée inférieur (e.g. 12) selon chaque axe X, Y, Z ;
- $g_{x,k,sup}$, $g_{y,k,sup}$, $g_{z,k,sup}$ désignent respectivement les gains du capteur accéléromètre tête-opposée supérieur (e.g. 11) selon chaque axe X, Y, Z ;
- $g_{x,k,inf}$, $g_{y,k,inf}$, $g_{z,k,inf}$ désignent respectivement les gains du capteur accéléromètre tête-opposée inférieur (e.g. 12) selon chaque axe X, Y, Z ; et
- G désigne le facteur d'échelle pour compenser le gain.

A l'étape 900, chaque capteur accéléromètre du dispositif accéléromètre 1 est calibré avant le montage des capteurs afin de déterminer le gain et le décalage de chaque capteur accéléromètre suivant chaque axe du capteur Xi, Yi, Zi (paramètres de calibrage). A l'étape 901, les paramètres de calibrage sont ensuite stockés dans l'unité de traitement 15.

Lorsque le dispositif 1 est monté sur une antenne acoustique, à l'étape 902, les accélérations peuvent être mesurées par chaque capteur selon chaque axe X, Y et Z.

A l'étape 903, pour chaque paire k comprenant deux capteurs tête-opposée (par exemple 11, 12 et 12, 13 dans l'exemple de la figure 5), les composantes d'accélération $X_k$, $Y_k$ et $Z_k$ calibrées suivant chacun des axes X, Y ou Z sont déterminées en effectuant la moyenne des valeurs mesurées par les différents capteurs suivant l'axe correspondant. Le calcul de la moyenne sur chaque axe peut prendre en compte les paramètres de calibrage tels que le gain et/ou le décalage (offset) de chaque capteur suivant l'axe et/ou le facteur G. Dans une forme de réalisation, les composantes d'accélération $X_k$, $Y_k$ et $Z_k$ moyennes peuvent être obtenues selon les équations suivantes :

EP 3 170 007 B1

$$X_k = G * \frac{\left(Y_{k,1} - b_{y,k,1}\right) * \dfrac{1}{g_{y,k,1}} - \left(Y_{k,2} - b_{y,k,2}\right) * \dfrac{1}{g_{y,k,2}}}{2}$$

$$Y_k = G * \frac{-\left(Z_{k,1} - b_{z,k,1}\right) * \dfrac{1}{g_{z,k,1}} + \left(Z_{k,2} - b_{z,k,2}\right) * \dfrac{1}{g_{z,k,2}}}{2}$$

$$Z_k = G * \frac{-\left(X_{k,1} - b_{x,k,1}\right) * \dfrac{1}{g_{x,k,1}} - \left(X_{k,2} - b_{x,k,2}\right) * \dfrac{1}{g_{x,k,2}}}{2}$$

L'homme du métier comprendra que les étapes 900 et 901 sont réalisées préalablement aux étapes 902 et 903 sans limitation de temps. Par ailleurs, l'homme du métier comprendra que les valeurs obtenues à l'étape 901 peuvent être utilisées pour plusieurs mesures selon les étapes 902 et 903.

Le dispositif accéléromètre 1 à base de capteurs MEMS selon les modes de réalisation de l'invention permet ainsi de compenser l'effet de la pression P exercée sur l'antenne. Les inventeurs ont notamment effectués des tests de pression de 0 à 60 bars sur 35 essais avec des capteurs accéléromètres MEMS de 8 types différents. Dans le cadre de tels tests, il a été observé sur les axes X et Y un décalage de référencement +-1 lsb (écart-type de 0,3) et sur l'axe Z un décalage de référencement de +-2 lsb (écart-type de 1).

Dans les formes de réalisation où les capteurs du dispositif accéléromètre ont une sensibilité différente à la pression, il est possible de tenir compte de cette sensibilité différente à partir de la loi d'erreur due à la pression et du positionnement des capteurs.

Le dispositif accéléromètre 1 offre ainsi une solution de faible coût pour mesurer l'accélération d'une antenne acoustique et compenser l'effet de la pression. Dans certaines applications acoustiques de l'invention, il a été observé notamment que le dispositif accéléromètre peut être utilisé jusqu'à 100 Bars (1000m) avec une bonne résistance jusqu' 500 Bars (5000m).

Le dispositif accéléromètre 1 présente également un encombrement réduit, ce qui permet d'empiler une pluralité de cartes 102 pour assurer une continuité de fonctionnement en cas de panne.

Le dispositif accéléromètre permet en outre de ramener le taux d'erreur de 20% observé avec les dispositifs accéléromètres classiques à un taux égal à 1 %. Il permet de plus une redondance des valeurs et donc une amélioration de la fiabilité.

Le dispositif accéléromètre 1 présente en outre une bonne endurance et fiabilité dans le temps. Il a été notamment observé que la sensibilité à la pression d'un capteur MEMS est constante dans le temps, pendant toute la durée de vie du dispositif.

L'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée à un type de capteur accéléromètre MEMS (11, 12). Elle n'est pas non plus limitée à un nombre de capteurs accéléromètres ni à un agencement particulier du dispositif accéléromètre dans un module acoustique associé. Par ailleurs, la phase de calibrage selon les étapes 900 et 901 peut être omise dans certaines formes de réalisations ou mises en œuvre différemment.

Plus généralement, l'invention n'est pas limitée à une application du dispositif accéléromètre à une antenne acoustique de type flûte et peut être utilisé pour mesurer l'accélération 3-axes de tout objet auquel il est relié mécaniquement. L'invention peut être utilisée par exemple pour lever l'ambiguïté droite/gauche en détection acoustique sous-marine ou encore pour déterminer la direction d'un objet dans l'espace. En particulier, le dispositif accéléromètre 1 peut être utilisé par exemple à l'arrêt pour mesurer la gravité terrestre en mode dit de « autotest ». La sortie de l'unité de traitement 15 peut être utilisée notamment par un mécanisme de réglage de positionnement (non représenté) pour régler le positionnement de l'objet à partir des références calculées par l'unité de traitement 15 selon chaque axe, selon une boucle d'asservissement.

**Revendications**

1. Antenne acoustique (10) comprenant au moins un module acoustique (100) et au moins un dispositif accéléromètre, ledit module acoustique comprenant un ou plusieurs capteurs acoustiques (101) montés sur au moins une carte de circuit imprimé (102) et une unité de traitement (15) configurée pour déterminer des références d'accélération, lesdits capteurs acoustiques délivrant des signaux électriques en utilisant des références d'accélération fournies par au moins un dispositif accéléromètre, **caractérisé en ce qu'** au moins un module acoustique (101) comprend un dispositif accéléromètre configuré pour déterminer l'accélération de l'antenne selon trois axes X, Y et Z d'un système de référence principal orthonormé (X, Y, Z), l'axe X correspondant à l'axe de roulis de l'antenne acoustique, l'axe Z correspond à l'axe de tangage de l'antenne acoustique et l'axe Y correspond à l'axe de lacet de l'antenne acoustique, le dispositif accéléromètre comprenant un ensemble de N de capteurs accéléromètres de type MEMS (11, 12, 13), lesdits capteurs accéléromètres étant montés sur l'une au moins des cartes de circuit imprimé (102), lesdits capteurs accéléromètres comprenant au moins trois capteurs accéléromètres montés de part et d'autre desdites au moins une carte de circuit imprimé (102), la position de chaque capteur accéléromètre (11, 12, 13) étant défini dans un système de référence auxiliaire comprenant 3 axes orthonormés (Xi, Yi, Zi), le plan (Xi, Yi) définissant le plan de chaque capteur accéléromètre et étant parallèle au plan (X, Z) du système de référence, et **en ce que**, pour chaque paire de capteurs dudit ensemble de capteurs accéléromètres :

   - les capteurs accéléromètres de la paire présentent deux à deux des composantes de signe opposé selon deux axes du système de référence principal ; et
   - les axes du système de référence selon lesquels les composantes des capteurs accéléromètres sont deux à deux opposées sur l'ensemble des paires de capteurs comprennent au moins deux des trois axes X, Y et Z du système de référence principal,

   chaque capteur accéléromètre (11, 12, 13) étant configuré pour déterminer l'accélération de l'antenne acoustique suivant chaque axe X, Y et Z,
   l'unité de traitement (15) étant configurée pour déterminer une référence d'accélération pour chaque axe du système de référence à partir des accélérations mesurées par chacune desdites paires de capteurs accéléromètres.

2. Antenne acoustique (10) selon la revendication 1, **caractérisé en ce que** la référence d'accélération déterminée pour chaque axe du système de référence principal est la moyenne des accélérations mesurées par chaque paire de capteurs accéléromètre selon ledit axe.

3. Antenne acoustique (10) selon la revendication 2, **caractérisé en ce que** le calcul de la moyenne des accélérations suivant un axe donné prend en outre en compte le gain et/ou le décalage de chaque capteur prédéterminé dans une phase de calibrage unitaire mise en œuvre séparément pour chaque capteur avant montage.

4. Antenne acoustique (10) selon l'une des revendications 2 et 3, **caractérisé en ce que** le calcul de la moyenne des accélérations suivant un axe donné prend en outre en compte un facteur de compensation de gain prédéfini.

5. Antenne acoustique (10) selon l'une des revendications 1 à 4, **caractérisé en ce que** ledit ensemble de capteurs accéléromètres comprend trois capteurs (11, 12, 13), et **en ce que** les axes du système de référence selon lesquels les composantes des capteurs sont deux à deux opposées sur l'ensemble des capteurs comprennent les trois axes X, Y et Z du système de référence, ce qui permet de corriger l'effet de la pression qui s'exerce sur l'objet selon les trois axes.

6. Antenne acoustique (10) selon l'une des revendications précédentes, **caractérisé en ce que** les capteurs accéléromètres ont une sensibilité différente à la pression.

7. Antenne acoustique (10) selon l'une des revendications précédentes, **caractérisé en ce que** le capteur acoustique (101) est un multi capteur acoustique d'axe sensiblement parallèle à l'axe de l'antenne acoustique.

8. Antenne acoustique (10) selon l'une des revendications précédentes, **caractérisé en ce que** lesdites cartes de circuit imprimé comprennent une pluralité de cartes de circuit imprimé (102), empilées sensiblement perpendiculairement à l'axe de l'antenne.

9. Antenne acoustique (10) selon l'une des revendications précédentes, **caractérisé en ce que** ledit au moins un capteur acoustique est monté sur une carte de circuit imprimé (102) dans une direction perpendiculaire à l'axe de l'antenne.

10. Antenne acoustique (10) selon l'une des revendications précédentes, **caractérisé en ce qu'**elle comprend un mécanisme de réglage de positionnement configuré pour régler le positionnement desdits capteurs acoustiques à partir des références calculées par l'unité de traitement (15) selon chaque axe.

11. Antenne acoustique selon l'une des revendications précédentes, **caractérisé en ce qu'**elle comprend au moins deux modules acoustiques.

12. Antenne acoustique selon l'une des revendications précédentes, **caractérisé en ce que** les deux capteurs accéléromètres d'une paire de capteurs accéléromètres montés de part et d'autre de ladite au moins une carte de circuit imprimé sont agencés, l'un par rapport à l'autre, dans la direction de l'axe de l'antenne, à une distance choisie.

**Patentansprüche**

1. Akustische Antenne (10), beinhaltend mindestens ein akustisches Modul (100) und mindestens eine Beschleunigungsmesservorrichtung, wobei das akustische Modul einen oder mehrere akustische Sensor(en) (101) beinhaltet, welche(r) auf mindestens einer Leiterplatte (102) montiert ist/sind und eine Verarbeitungseinheit (15), welche konfiguriert ist, um Beschleunigungsreferenzen zu bestimmen, wobei die akustischen Sensoren elektrische Signale abgeben, indem sie die durch mindestens eine Beschleunigungsmesservorrichtung bereitgestellten Beschleunigungsreferenzen verwenden, **dadurch gekennzeichnet, dass** mindestens ein akustisches Modul (101) eine Beschleunigungsmesservorrichtung beinhaltet, welche konfiguriert ist, um die Beschleunigung der Antenne entlang drei Achsen X, Y und Z eines orthonormierten Haupt-Bezugssystems (X, Y, Z) zu bestimmen, wobei die Achse X der Rollachse der akustischen Antenne entspricht, die Achse Z der Nickachse der akustischen Antenne entspricht und die Achse Y der Gierachse der akustischen Antenne entspricht, wobei die Beschleunigungsmesservorrichtung eine Gruppe N von Beschleunigungsmessersensoren vom Typ MEMS (11, 12, 13) beinhaltet, wobei die Beschleunigungsmessersensoren auf mindestens einer der Leiterplatten (102) montiert sind, wobei die Beschleunigungsmessersensoren mindestens drei Beschleunigungsmessersensoren beinhalten, welche beiderseits der mindestens einen Leiterplatte (102) montiert sind, wobei die Position eines jeden Beschleunigungsmessersensors (11, 12, 13) in einem Hilfs-Bezugssystem definiert ist, welches 3 orthonormierte Achsen (Xi, Yi, Zi) beinhaltet, wobei die Ebene (Xi, Yi) die Ebene eines jeden Beschleunigungsmessersensors definiert und parallel zur Ebene (X, Z) des Bezugssystems ist, und dadurch, dass bei jedem Sensorpaar der Gruppe von Beschleunigungsmessersensoren:

   - die Beschleunigungsmessersensoren des Paares jeweils paarweise Komponenten mit gegenteiligem Vorzeichen entlang zwei Achsen des Haupt-Bezugssystems aufweisen; und
   - die Achsen des Bezugssystems, denen entsprechend die Komponenten der Beschleunigungsmessersensoren einander paarweise auf sämtlichen Sensorpaaren gegenüberliegen, mindestens zwei der drei Achsen X, Y und Z des Haupt-Bezugssystems beinhalten,

   jeder Beschleunigungsmessersensor (11, 12, 13) konfiguriert ist, um die Beschleunigung der akustischen Antenne entsprechend jeder Achse X, Y und Z zu bestimmen,
   die Verarbeitungseinheit (15) konfiguriert ist, um eine Beschleunigungsreferenz für jede Achse des Bezugssystems anhand der durch jedes der Beschleunigungsmessersensor-Paare gemessenen Beschleunigungen zu bestimmen.

2. Akustische Antenne (10) nach Anspruch 1, **dadurch gekennzeichnet, dass** die Beschleunigungsreferenz, welche für jede Achse des Haupt-Bezugssystems bestimmt wird, der Mittelwert der durch jedes der Beschleunigungsmessersensor-Paare gemessenen Beschleunigungen entlang dieser Achse ist.

3. Akustische Antenne (10) nach Anspruch 2, **dadurch gekennzeichnet, dass** die Berechnung des Mittelwertes der Beschleunigungen entlang einer gegebenen Achse zudem die Verstärkung und/oder die Verschiebung eines jeden vorbestimmten Sensors in einer einzigen Kalibrierungsphase berücksichtigt, welche getrennt für jeden Sensor vor der Montage durchgeführt wird.

4. Akustische Antenne (10) nach einem der Ansprüche 2 und 3, **dadurch gekennzeichnet, dass** die Berechnung des Mittelwertes der Beschleunigungen entlang einer gegebenen Achse zudem einen vorbestimmten Verstärkungs-Kompensationsfaktor berücksichtigt.

5. Akustische Antenne (10) nach einem der Ansprüche 1 bis 4, **dadurch gekennzeichnet, dass** die Gruppe von Beschleunigungsmessersensoren drei Sensoren (11, 12, 13) beinhaltet, und dadurch, dass die Achsen des Bezugssystems, entlang welcher die Komponenten der Sensoren einander paarweise an sämtlichen Sensoren gegenüberliegenden, die drei Achsen X, Y und Z des Bezugssystems beinhalten, wodurch es möglich ist, den Effekt des Drucks zu korrigieren, welcher sich entlang der drei Achsen auf das Objekt auswirkt.

6. Akustische Antenne (10) nach einem der vorhergehenden Ansprüche, **dadurch gekennzeichnet, dass** die Beschleunigungsmessersensoren eine unterschiedliche Druckempfindlichkeit aufweisen.

7. Akustische Antenne (10) nach einem der vorhergehenden Ansprüche, **dadurch gekennzeichnet, dass** der akustische Sensor (101) ein akustischer Mehrfachsensor ist, dessen Achse im Wesentlichen parallel zur Achse der akustischen Antenne ist.

8. Akustische Antenne (10) nach einem der vorhergehenden Ansprüche, **dadurch gekennzeichnet, dass** die Leiterplatten eine Vielzahl von Leiterplatten (102) beinhaltet, welche im Wesentlichen rechtwinklig zur Achse der Antenne gestapelt ist.

9. Akustische Antenne (10) nach einem der vorhergehenden Ansprüche, **dadurch gekennzeichnet, dass** der mindestens eine akustische Sensor auf einer Leiterplatte (102) rechtwinklig zur Achse der Antenne montiert ist.

10. Akustische Antenne (10) nach einem der vorhergehenden Ansprüche, **dadurch gekennzeichnet, dass** sie mindestens einen Positionierung-Einstellmechanismus beinhaltet, welcher konfiguriert ist, um die Positionierung der akustischen Sensoren anhand von durch die Verarbeitungseinheit (15) entlang einer jeden Achse berechneten Referenzen einzustellen.

11. Akustische Antenne nach einem der vorhergehenden Ansprüche, **dadurch gekennzeichnet, dass** sie mindestens zwei akustische Module beinhaltet.

12. Akustische Antenne nach einem der vorhergehenden Ansprüche, **dadurch gekennzeichnet, dass** die zwei Beschleunigungsmessersensoren eines Paares von Beschleunigungsmessersensoren, welche beiderseits der mindestens einen Leiterplatte montiert sind, zueinander in der Richtung der Achse der Antenne in einem gewählten Abstand angeordnet sind.

## Claims

1. Acoustic antenna (10) comprising at least one acoustic module (100) and at least one accelerometer device, said acoustic module comprising one or more acoustic sensors (101) mounted on at least one printed circuit board (102) and a processing unit (15) configured to determine acceleration references, said acoustic sensors delivering electrical signals by using acceleration references provided by at least one accelerometer device, **characterized in that** at least one acoustic module (101) comprises an accelerometer device configured to determine the acceleration of the antenna along three axes X, Y and Z of a system of main orthonormal reference (X, Y, Z), the X axis corresponding to the roll axis of the acoustic antenna, the Z axis corresponds to the pitch axis of the acoustic antenna and the axis Y corresponds to the yaw axis of the acoustic antenna, the accelerometer device comprising a set of N accelerometer sensors of MEMS-type (11, 12, 13), said accelerometer sensors being mounted on at least one of the printed circuit boards (102), said accelerometer sensors comprising at least three accelerometer sensors mounted on both sides of said at least one printed circuit board (102), the position of each accelerometer sensor (11, 12, 13) being defined in an auxiliary reference system comprising 3 orthonormal axes (Xi, Yi, Zi), the plane (Xi, Yi) defining the plane of each accelerometer sensor and being parallel to the plane (X, Z) of the reference system, and **in that**, for each pair of sensors of said set of accelerometer sensors

   - the accelerometer sensors of the pair have, in twos, components of opposite sign along two axes of the main reference system; and
   - the axes of the reference system along which the components of the accelerometer sensors are, in twos, opposite on the set of the pairs of sensors comprise at least two of the three axes X, Y and Z of the main system reference,

   each accelerometer sensor (11, 12, 13) being configured to determine the acceleration of the acoustic antenna along each axis X, Y and Z,
the processing unit (15) being configured to determine an acceleration reference for each axis of the reference system from the accelerations measured by each of said pairs of accelerometer sensors.

2. Acoustic antenna (10) according to claim 1, **characterized in that** the acceleration reference determined for each axis of the main reference system is the mean of the accelerations measured by each pair of accelerometer sensors along said axis.

3. Acoustic antenna (10) according to claim 2, **characterized in that** the calculation of the mean of the accelerations along a given axis further takes into account the gain and/or the offset of each predetermined sensor in a unit calibration phase implemented separately for each sensor before mounting.

4. Acoustic antenna (10) according to one of claims 2 and 3, **characterized in that** the calculation of the average of the accelerations along a given axis further takes into account a predefined gain compensation factor.

5. Acoustic antenna (10) according to one of claims 1 to 4, **characterized in that** said set of accelerometer sensors comprises three sensors (11, 12, 13), and **in that** the axes of the reference system along which the components of the sensors are, in pairs, opposite on the set of sensors comprise the three axes X, Yet Z of the reference system, which corrects the effect of the pressure exerted on the object along the three axes.

6. Acoustic antenna (10) according to one of the preceding claims, **characterized in that** the accelerometer sensors have a different sensitivity to pressure.

7. Acoustic antenna (10) according to one of the preceding claims, **characterized in that** the acoustic sensor (101) is an acoustic multisensor with an axis substantially parallel to the axis of the acoustic antenna.

8. Acoustic antenna (10) according to one of the preceding claims, **characterized in that** said printed circuit boards comprise a plurality of printed circuit boards (102), stacked substantially perpendicularly to the axis of the antenna.

9. Acoustic antenna (10) according to one of the preceding claims, **characterized in that** said at least one acoustic sensor is mounted on a printed circuit board (102) in a direction perpendicular to the axis of the antenna.

10. Acoustic antenna (10) according to one of the preceding claims, **characterized in that** it comprises a positioning adjustment mechanism configured to adjust the position of said acoustic sensors on the basis of references calculated by the processing unit (15) along each axis.

11. Acoustic antenna according to one of the preceding claims, **characterized in that** it comprises at least two acoustic modules.

12. Acoustic antenna according to one of the preceding claims, **characterized in that** the two accelerometer sensors of a pair of accelerator sensors mounted on either side of said at least one printed circuit board are arranged, one with respect to the other, in the direction of the antenna axis, at a chosen distance.

P

2

10

**FIGURE 1**

100    1    100    1    100    1    100    1    100

1    102    101    101    101    101    101

Δ

10    103    103    102    103    102    103    102    103    102    104

**FIGURE 2**

EP 3 170 007 B1

**FIGURE 3**

15

**FIGURE 4**

**FIGURE 5**

**FIGURE 6**

**FIGURE 7**

**FIGURE 8**

Détermination des Paramètres de
calibration unitaire(900)

CALIBRATION
AVANT
MONTAGE

Stockage des Paramètres de
calibration unitaire (901)

Mesure d'accélération 3 axes

Mesures des accélérations par
chaque capteur accéléromètre
suivant chaque axe X, Y et Z (902)

Calcul des accélérations moyennes
sur chaque axe $X_k$, $Y_k$ et $Z_k$ (903)

**FIGURE 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009326851 A
- FR 2979150 A1

- WO 2006076499 A